# EUROPEAN PATENT APPLICATION

(11) **EP 2 897 332 A1**
(43) Date of publication of application: **22.07.2015**
(21) Application number: 13837769.2
(22) Date of filing: 10.09.2013
(51) Int. Cl.: H04L 12/717

(54) **CONTROLLER, COMMUNICATION SYSTEM, COMMUNICATION METHOD AND PROGRAM**

(30) Priority: 11.09.2012 JP 2012199281
(71) Applicant: NEC Corporation, Tokyo 108-8001 (JP)
(72) Inventor: SASAKI, Takayuki, Tokyo 108-8001 (JP); NAKAE, Masayuki, Tokyo 108-8001 (JP); MORITA, Yoichiro, Tokyo 108-8001 (JP); SHIMONISHI, Hideyuki, Tokyo 108-8001 (JP); SONODA, Kentaro, Tokyo 108-8001 (JP); HATANO, Yoichi, Tokyo 108-8001 (JP); YAMAGATA, Masaya, Tokyo 108-8001 (JP)
(74) Representative: Vossius & Partner Patentanwälte Rechtsanwälte mbB
(86) International application number: PCT/JP2013/074343
(87) International publication number: WO 2014/042141

(57) **Abstract**

Disclosed is a control device which reduces a load of the control device responding to a transmission request for control information. The control device includes a control information management unit which manages control information including a match field and used for causing a packet which matches with the match field to be processed; a transmission request storage unit which stores uncontrolled transmission requests in transmission requests for control information for packets received by a switch under the control from the switch; and a request processing unit which selects a piece of control information having a looser match field from among pieces of control information managed by the control information management unit, selects an unprocessed transmission requests for control information which matches the selected piece of control information having a looser match field in unprocessed transmission requests for control information stored in the transmission request storage unit, and replies control information with the looser match field to the switch transmitting the unprocessed transmission requests for the control information.

## Description

### Technical Field

### [Description on related application]

The present invention is based upon Japanese Patent Application No. 2012-199281, filed on September 11, 2012, the disclosure of which is incorporated herein in its entirety by reference.

The present invention relates to a control device, a communication system, a communication method and a program and, in particular, to a control device, a communication system, a communication method and a program that control switches under control.

### Background Art

A technology called OpenFlow has been recently proposed (see NPLs 1 and 2). In OpenFlow, communication is regarded as an end-to-end flow, and routing control, failure recovery, load balancing and optimization are performed in flow granularity. An OpenFlow switch defined in NPL 2 includes a secure channel for communication with an OpenFlow controller and operates according to a flow table for which an order to add or modify is appropriately provided from the OpenFlow controller. In the flow table, for each flow, sets of match condition (i.e. Match Fields) to be compared with a packet header, flow statistical information (i.e. Counters), and instructions (i.e. Instructions) in which actions are defined (see "4.1 Flow Table" in NPL 2).

For example, when the OpenFlow switch receives a packet, the OpenFlow switch searches the flow table for an entry having a match field that matches header information of the received packet (see "4.3 Match Fields" in NPL 2). When an entry that matches the received packet is found as a result of searching, the OpenFlow switch updates the flow statistical information (i.e. Counters) and executes processing content (such as packet transmission from a specified port, flooding or dropping of the process) described in the instruction field of the entry on the received packet. When an entry that matches the received packet is not found as a result of searching, the OpenFlow switch sends a request of entry setting, i.e. a transmission request for control information (i.e. a Packet-In message) for processing the received packet to the OpenFlow controller through a secure channel. The OpenFlow switch receives a flow entry in which processing content is specified, and updates the flow table. In this way, the OpenFlow switch performs packet transmission by using an entry in the flow table as control information.

### Citation List

### Non Patent Literature

NPL 1: Nick McKeown and seven others, "OpenFlow: Enabling Innovation in Campus Network", [online], (retrieved on June 21, 2012), Internet <URL:http://www.openflow.org/documents/openflow-wp-latest.pdf>
NPL 2: "OpenFlow Switch Specification" Version 1.1.0 Implemented (Wire Protocol 0x02), [online], (retrieved on June 21, 2012), Internet <URL:http://www.openflow.org/documents/openflow-spec-v1.1.0.pdf>

### Technical Problem

The following analysis is given by the present invention.

As described above, a switch such as the OpenFlow switch transmits a transmission request for control information when the switch does not hold the control information (which is equivalent to the "entry" described above) that matches a received packet. There is also a case in which the switch performs an operation of dropping an unknown packet by default and sets an entry that causes transmission of a transmission request for control information only for a packet having a certain feature.

Accordingly, when a particular switch receives a large number of packets, a large number of transmission requests for control information may be transmitted to the controller. As a result, load on the controller increases, which may result in a problem such as delay in replying to transmission requests for control information that are issued from other switches.

An object of the present invention is to provide a control device, a communication system, a communication method and a program that are capable of reducing the load on a control device, such as the controller described above, that responds to a transmission request for control information from a switch.

### Solution to Problem

According to a first aspect, a control device is provided. A control device including: a control information management unit which manages control information including a match field and used for causing a packet which matches with the match field to be processed; a transmission request storage unit which stores uncontrolled transmission requests in transmission requests for control information for packets received by a switch under the control from the switch; and a request processing unit which selects a piece of control information having a looser (wider) match field from among pieces of control information managed by the control information management unit, selects an unprocessed transmission requests for control information which matches the selected piece of control information having a looser (wider) match field in unprocessed transmission requests for control information stored in the transmission request storage unit, and replies control information with the looser (wider) match field to the switch transmitting the unprocessed transmission requests for the control information.

According to a second aspect, a communication system is provided. The control apparatus includes: the communication system has a control device including; a control information management unit which manages control information including a match field and used for causing a packet which matches with the match field to be processed, a transmission request storage unit which stores uncontrolled transmission requests in transmission requests for control information for packets received by a switch under the control from the switch and a request processing unit which selects a piece of control information having a looser (wider) match field from among pieces of control information managed by the control information management unit, selects an unprocessed transmission requests for control information which matches the selected piece of control information having a looser (wider) match field in unprocessed transmission requests for control information stored in the transmission request storage unit, and replies control information with the looser (wider) match field to the switch transmitting the unprocessed transmission requests for the control information; and a switch which transmits the transmission request for the control information to the control device.

According to a third aspect, a communication method is provided. The program includes: by a control device including a control information management unit which manages control information including a match field and used for causing a packet which matches with the match field to be processed,
a step of storing, in a transmission request storage unit, unprocessed transmission requests in transmission requests for the control information to process packets received from a switch which is controlled by the control device; and
a step of selecting a piece of control information having a looser (wider) match field from among pieces of control information managed by the control information management unit, selects an unprocessed transmission requests for control information which matches the selected piece of control information having a looser (wider) match field in unprocessed transmission requests for control information stored in the transmission request storage unit, and replies control information with the looser (wider) match field to the switch transmitting the unprocessed transmission requests for the control information.

According to a fourth aspect, a program is provided. The program makes a computer, which realizes a control device including a control information management unit which manages control information including a match field and used for causing a packet which matches with the match field to be processed, execute:
a process that stores uncontrolled transmission requests in transmission requests for control information for packets received by a switch under the control from the switch; and
a process that selects a piece of control information having a looser (wider) match field from among pieces of control information managed by the control information management unit, selects an unprocessed transmission requests for control information which matches the selected piece of control information having a looser (wider) match field in unprocessed transmission requests for control information stored in the transmission request storage unit, and replies control information with the looser (wider) match field to the switch transmitting the unprocessed transmission requests for the control information.

### Advantageous Effects of Invention

According to the present invention, it is possible to reduce load on a control device that responds to a transmission request to transmit control information from switches can be reduced.

### Brief Description of Drawings

[Fig. 1] Fig. 1 is a diagram for describing one exemplary embodiment of the present invention.
[Fig. 2] Fig. 2 is a diagram illustrating a structure of a first exemplary embodiment of the present invention.
[Fig. 3] Fig. 3 is a diagram illustrating an operation of the first exemplary embodiment of the present invention.
[Fig. 4] Fig. 4 is a diagram continued from Fig. 3.
[Fig. 5] Fig. 5 is a diagram for describing a comparative example of the first exemplary embodiment of the present invention.
[Fig. 6] Fig. 6 is a diagram continued from Fig. 5.
[Fig. 7] Fig. 7 is a diagram for describing a comparison process performed when a plurality of fields are used as match fields.
[Fig. 8] Fig. 8 is a diagram illustrating a structure of a second exemplary embodiment of the present invention.
[Fig. 9] Fig. 9 is a flowchart illustrating an exemplary operation of a control device of the second exemplary embodiment of the present invention.
[Fig. 10] Fig. 10 is a diagram for describing an operation of the second exemplary embodiment of the present invention.
[Fig. 11] Fig. 11 is a diagram for describing another exemplary embodiment of the present invention.

### Description of Embodiments

First, an overview of one exemplary embodiment of the present invention will be described with reference to drawings. Note that reference signs assigned to elements in this overview are only for convenience in order to provide clear understanding and are not intended to limit the present invention to aspects illustrated in the drawings.

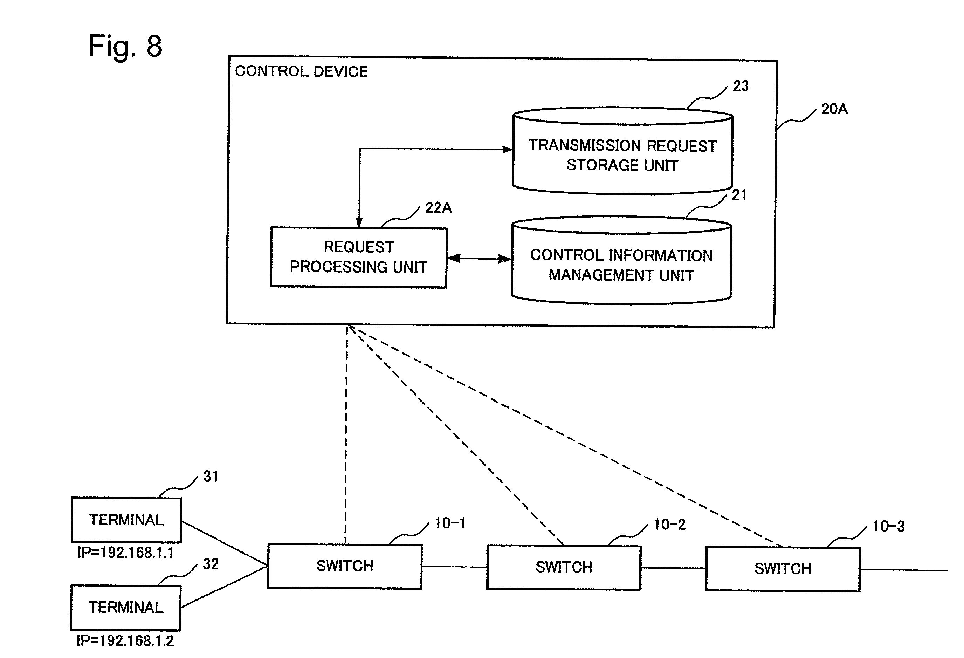

The present invention can be realized by a control device (20A in Fig. 8) which controls switches (10-1 to 10-3 or the like in Fig. 8) as shown in Fig. 8. More specifically, the control device (20A in Fig. 8) includes a control information management unit (21 in Fig. 8) to manage control information which instructs to carry out processing a packet which matches with a match condition. The control information management unit stores the match condition. The control device includes a transmission request storage unit (23 in Fig. 8) which manages control information including a match field and used for causing a packet which matches with the match field to be processed. The control device includes a request processing unit (22A in Fig. 8). The request processing unit selects a piece of control information having a looser match field from among pieces of control information managed by the control information management unit. Next, the request processing unit selects an unprocessed transmission requests for control information which matches the selected piece of control information having a looser (wider) match field in unprocessed transmission requests for control information stored in the transmission request storage unit. Next, the request processing unit replies control information with the looser match field to the switch transmitting the unprocessed transmission requests for the control information.

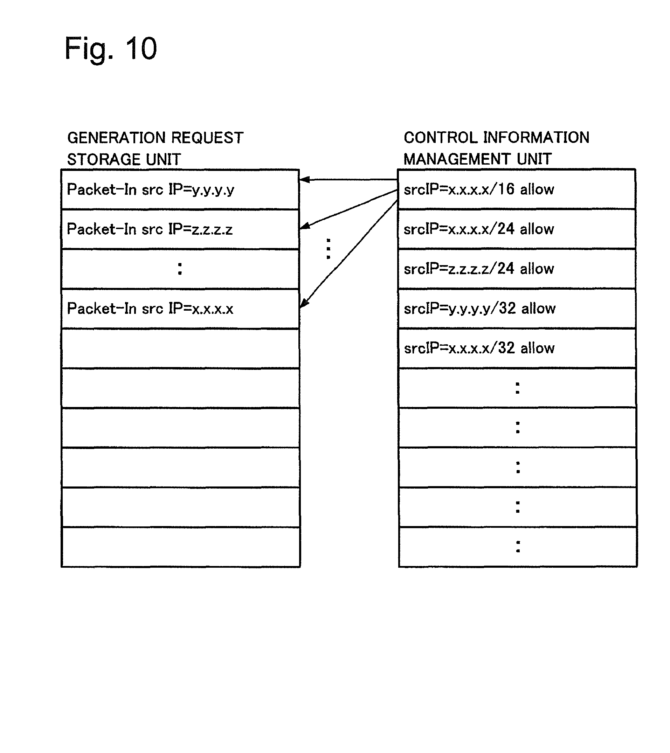

For example, as shown in Fig. 10, the control device (20A in Fig. 8A) selects a flow entry, which has the widest (loosest) match condition (x. x. x. x / 16 allow), from the control information management unit (21 in Fig. 8) Next, the control device searches the transmission request storage unit 23 for a Packet-In message which matches with the match condition (x. x. x. x / 16 allow) of the flow entry. As a result, for example, in Fig. 10, a transmission request for the control information (Packet-In message), whose sending source IP address is srcIP = x. x. x. x, is processed early.

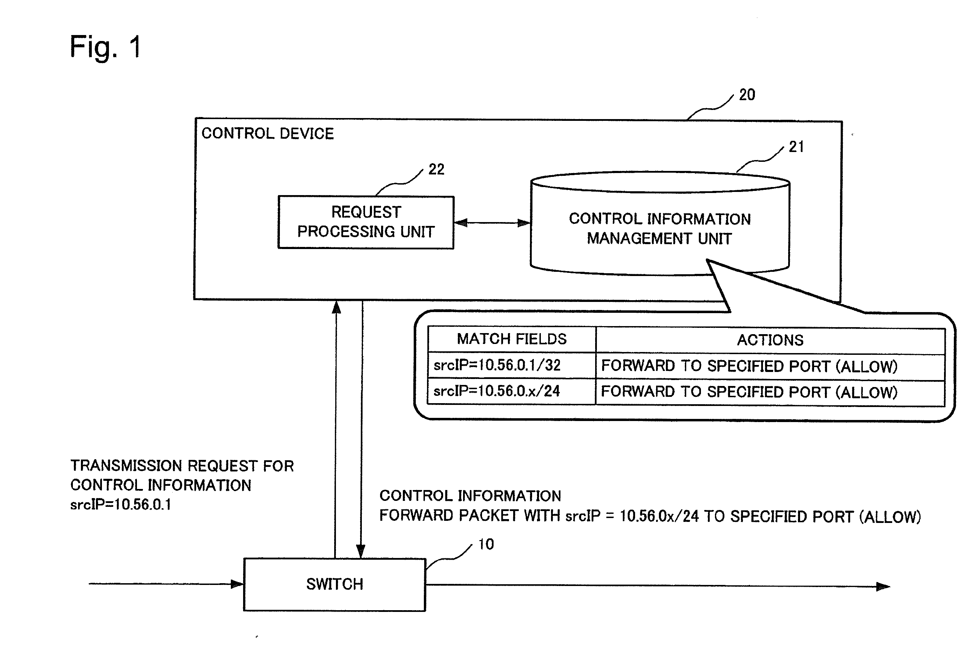

According to another exemplary embodiment, the present invention is able to be implemented by a control device 20 that controls a switch 10 as illustrated in Fig. 1. More specifically, the control device 20 includes a control information management unit (21 in Fig. 1) which manages control information including match fields and used for causing a packet that matches the match field to be processed, and a request processing unit (22 in Fig. 1) which, when receiving, from a switch under control, a transmission request for control information for processing a packet which the switch receives, compares the match field of the control information managed by the control information management unit with a field, which is to be compared with the match field, of a packet received by the switch, selects, from pieces of control information having match fields which match the field of the packet, a piece of control information having a looser match field, i.e. a match field having a wider match range, and replies to the switch with the selected piece of control information.

For example, when the control device 20 receives a transmission request for control information for a packet with a source IP address of 10.56.0.1 as illustrated in Fig. 1, the control device 20 compares the control information with match fields in two pieces of control information managed by the control information management unit (21 in Fig. 1). In the example in Fig. 1, both the control information with a match field srcIP = 10.56.0.1/32 and the control information with a match field srcIP = 10.56.0.x/24 match the source IP address of the received packet. The control device 20 selects the control information having a looser match field, i.e. a match field that has a wider matching range, namely the control information with srcIP = 10.56.0.x/24 whose prefix is shorter, and replies to the switch 10 with the selected control information. Note that while the control information whose a match field is wider is selected by using a prefix in the example described above, control information having a wider match field may be selected on the basis of a mask or range instead of a prefix.

By replying with control information with a looser match field, i.e. a wider match range in this way, when receiving another packet in the switch 10 for which the control information is set, it is probable to match the control information, and therefore there is little probability that a transmission request for control information is issued. Consequently, the load on the control device 20 is able to be reduced. In addition, as a secondary effect, it is possible to reduce load on the switch 10 because it is not necessary to transmit queries to the control device 20 at the switch 10.

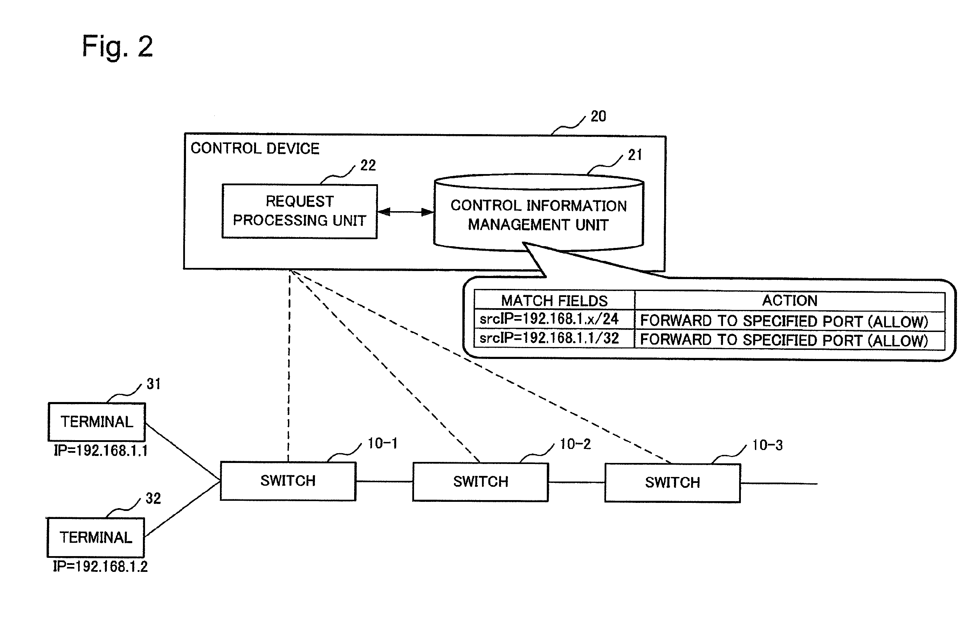

[First exemplary embodiment] Next, a first exemplary embodiment of the present invention will be described in detail with reference to drawings. Fig. 2 is a diagram illustrating a structure of the first exemplary embodiment of the present invention. Referring to Fig. 2, a control device 20 including a control information management unit 21 and a request processing unit 22, switches 10-1 - 10-3 controlled by the control device 20, and terminals 31, 32 connected with a network implemented using the switches 10-1 - 10-3 are illustrated.

The switches 10-1 - 10-3 are equivalent to the OpenFlow switches in NPLs 1 and 2. When holding no flow entry having a match field which matches a received packet or when a flow entry having a match field which matches a received packet orders a notification to the control device 20, the switches 10-1 - 10-3 transmit, to the control device 20, a message (hereinafter referred to as a "Packet-In message") to request the control device 20 to send a flow entry.

Flow entries generated beforehand based on access policies of terminal users or the like are stored in the control information management unit 21 of the control device 20. The flow entries stored in the control information management unit 21 are sorted in the state where the flow entries with the widest match field are listed first. By sorting flow entries in this way, searching a flow entry for a packet requested in a Packet-In message is speeded up. In this exemplary embodiment, it is assumed that flow entries are sorted so that an entry whose condition for a source IP address used as the match field is looser, i.e. an entry with a wider match range is listed earlier. Specifically, it is assumed that a flow entry that forwards a packet with a source IP address (i.e. srcIP) matching 192.168.1. 1/32 to the next hop (i.e. specified port) is stored next to a flow entry that forwards a packet with a source IP address (i.e. srcIP) matching 192.168.1.x/24 to the next hop (i.e. specified port) as illustrated in Fig. 2.

When receiving a Packet-In message from switches 10-1-10-3, the request processing unit 22 of the control device 20 searches the control information management unit 21 for a flow entry having a match field that matches a packet specified in the Packet-In message. The request processing unit 22 of the control device 20 then transmits the flow entry found as a result of searching to the switch 10-1. In this exemplary embodiment, note that at this time point, the request processing unit 22 of the control device 20 transmits to the switches 10-2 and 10-3 a flow entry having the same match field and directing each of the switches 10-2 and 10-3 to forward the packet to the next switch.

Note that the control device as described above is able to be implemented also by adding the functions equivalent to the control information management unit 21 and the request processing unit 22 to any of the OpenFlow controllers in NPLs 1 and 2.

The request processing unit 22 of the control device 20 illustrated in Fig. 2 is able to be implemented also by a computer program that causes a computer used for implement the control device 20 to execute, by using its hardware, the flow entry searching process and flow entry sending process in the request processing unit 22 described above.

In this exemplary embodiment, it is also assumed that two terminals 31, 32 are connected with the switch 10-1 disposed at an end of the network. It is also assumed in the following description that the IP address of the terminal 31 is 192.168.1.1 and the IP address of the terminal 32 is 192.168.1.2.

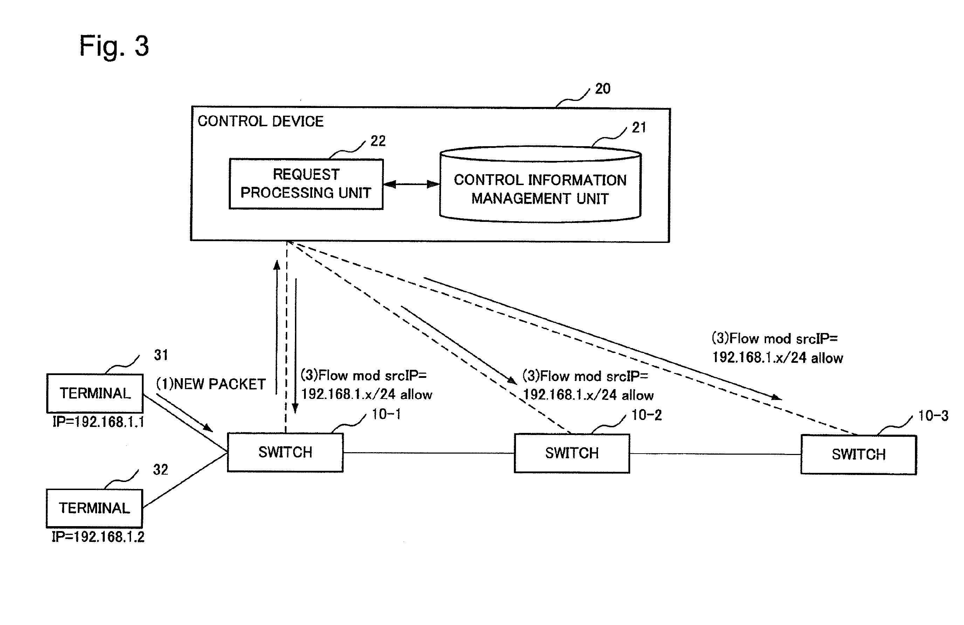

An operation of this exemplary embodiment will now be described in detail with reference to drawings. Fig. 3 is a diagram illustrating an operation after the terminal 31 starts communication and the first packet is transmitted until a flow entry for processing a subsequent packet is set on the switches 10-1 - 10-3 on the path.

Referring to Fig. 3, first, the terminal 31 transmits a packet with its own IP address, 192.168.1.1, as the source IP address to an arbitrary destination (a destination IP address and the like are arbitrary) ((1) of Fig. 3).

The switch 10-1, when receiving the packet with IP address 192.168.1.1 as the source IP address, searches for a flow entry having a match field that matches the packet. However, the flow entry is not set at this time point. Accordingly, the switch 10-1 sends a Packet-In message containing the packet or packet information extracted from the packet to the control device 20 ((2) of Fig. 3).

When receiving the Packet-In message, the request processing unit 22 of the control device 20 searches the control information management unit 21 for a flow entry having a match field that matches the packet specified in the Packet-In message. Since flow entries are sorted beforehand so that the entry with the looser match field, i.e. the entry having the wider match range is listed earlier in this exemplary embodiment, a flow entry that forwards a packet matching 192.168.1.x/24 to the next hop (i.e. specified port) is the flow entry to be forward to the switch.

The control device 20 then transmits the flow entry having the source IP address = 192.168.1.x/24 as a match field to the switch 10-1. The control device 20 also sends to each of the switches 10-2, 10-3 a flow entry having the same match field and directing the switch to forward the packet to the next switch ((3) of Fig. 3).

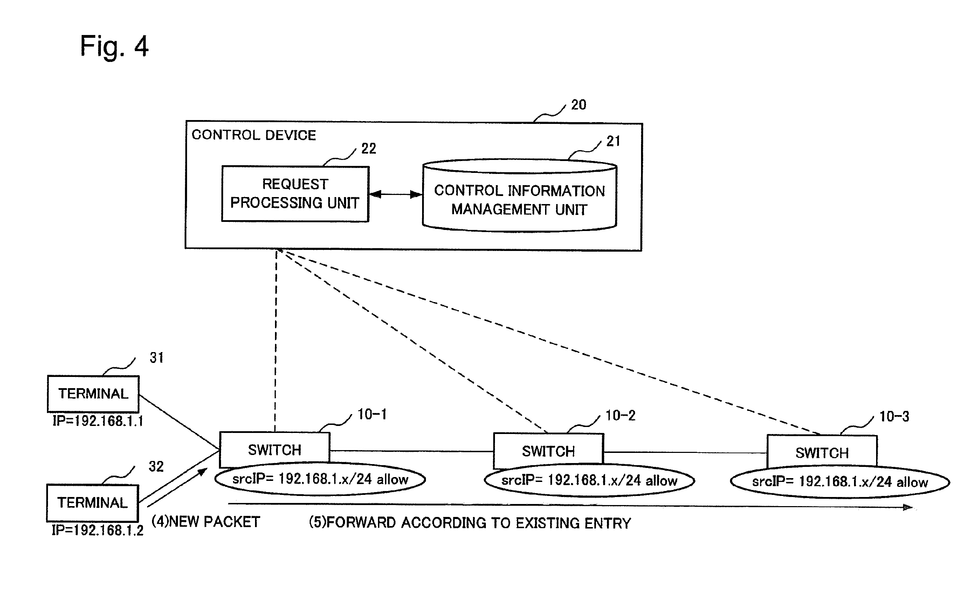

As described above, once the flow entry having a wider match field is set, when the terminal 32 initiates communication and transmits a packet ((4) of Fig. 4, a packet with a source IP address of 192.168.1.2, for example, is processed according to the flow entry set in (3) of Fig. 3 and therefore the packet is forwarded without transmission of a Packet-In message to the control device 20 ((5) of Fig. 4).

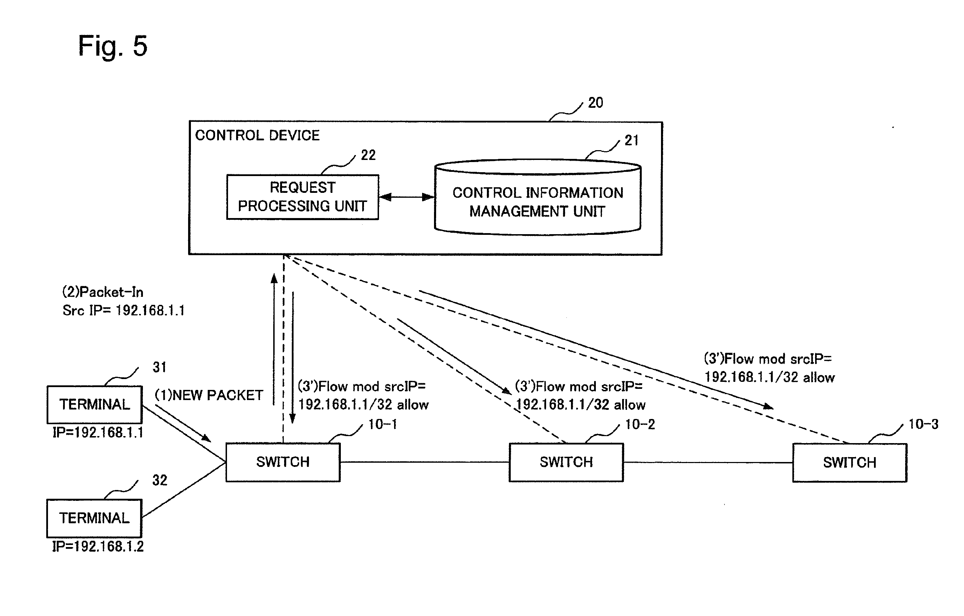

Fig. 5 is a diagram for describing an operation (as an example for reference) performed when a flow entry selected using a longest match is set instead of a flow entry having a wider match field as this exemplary embodiment. As illustrated in Fig. 5, when a flow entry is selected using longest match, a flow entry to forward a packet with a source IP address (i.e. srcIP) matching 192.168.1.1/32 to the next hop (i.e. specified port) is set instead of a flow entry to forward a packet with a source IP address (i.e. srcIP) matching 192.168.1x/24 to the next hop (i.e. specified port) ((1) to (3) of Fig. 5).

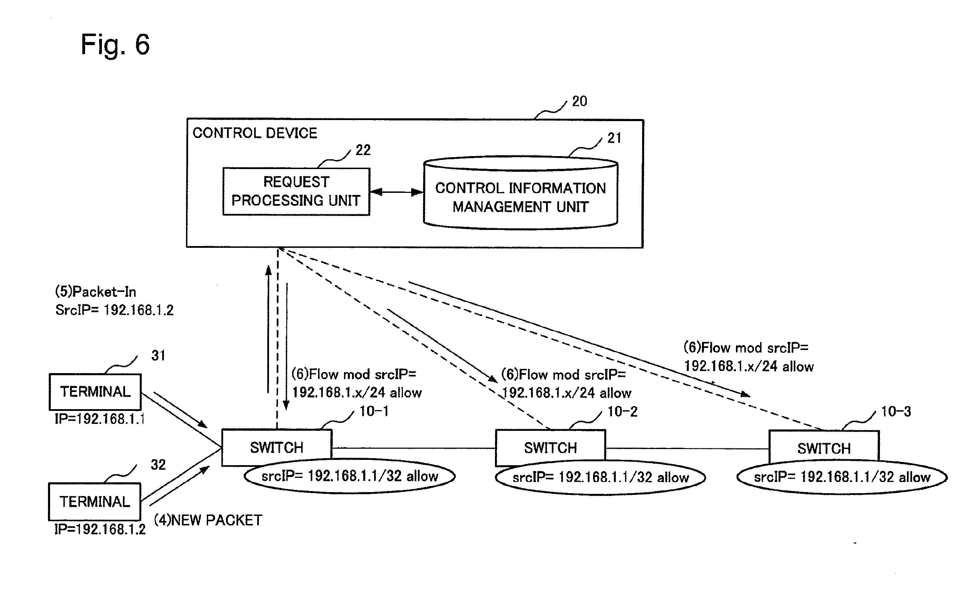

When the terminal 32 initiates communication as in the first exemplary embodiment described above and sends a packet with a source IP address of 192.168.1.2, a switch 10-1 transmits to the control device 20 a Packet-In message to request to set a flow entry for processing the packet from the terminal 32 because the switch 10-1 received the packet that does not match the existing flow entries. The control device 20 sends to switches 10-1 - 10-3 a flow entry to forward a packet that matches 192.168.1.x/24 to the next hop (i.e. specified port) ((4) to (6) of Fig. 6).

According to the present exemplary embodiment described above, the load on a control device that responds to Packet-In messages from switches is able to be reduced. This is because of a configuration in which a flow entry with a wider match field in a plurality of flow entries is set earlier.

Note that while an operation in which a flow entry for forwarding a packet is transmitted as control information is described in the exemplary embodiment described above, a flow entry that causes a switch to drop a packet may be transmitted.

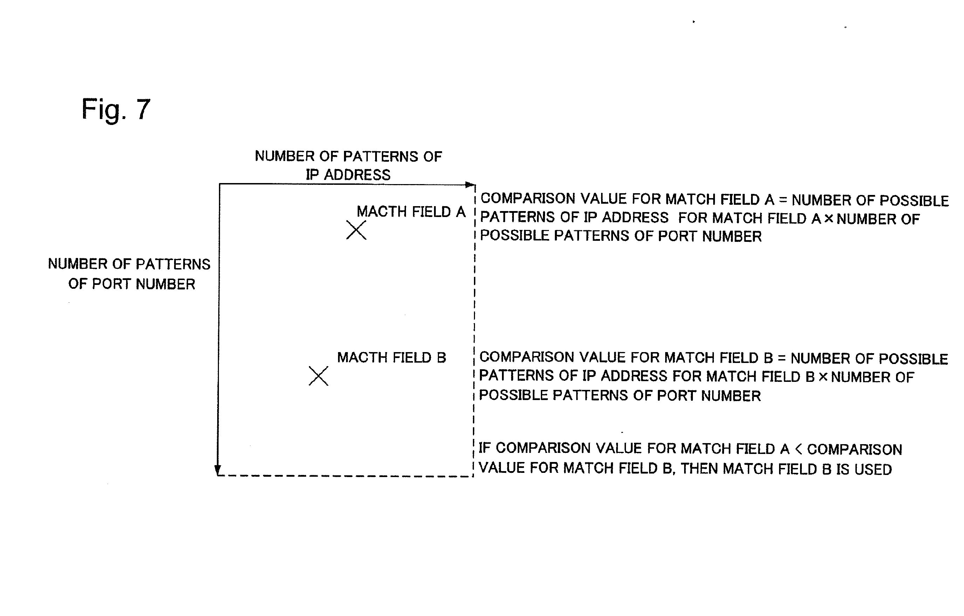

Furthermore, while only a source IP address is used as a match field in the example of the exemplary embodiment described above, a plurality of fields may be used as the match field. Fig. 7 is a diagram for describing a comparison process of flow entries when an IP address and a port number are used as a match field. It is assumed that the larger the numbers of possible patterns of both of the IP address and the port number, the looser, i.e. the wider the match range of the match field which is set. In this case, the number of possible patterns of the IP address multiplied by the number of possible patterns of the port number may be considered as the looseness of the match field, i.e. the wideness of the match range. Therefore, a flow entry having a match field with a larger value (i.e. comparison value) that is a product of the number of patterns of an IP address and the number of patterns of a port number may be selected. For example, in the example of Fig. 7, the match field B which has a larger value (i.e. comparison value) that is a product of the number of patterns of the IP address and the number of patterns of the port number is selected. This is equivalent to the operation of selecting a match filed that has a smaller product of the lengths (such as prefix lengths) of the match fields.

When only a condition for a lower-level protocol (i.e. layer) is specified as a match field, the comparison value may be calculated by considering a condition for a higher-level protocol (i.e. layer) as "any" (i.e. a wildcard). For example, when only designation of IPv4 is specified for protocol (i.e. layer) of an Ethernet (registered trademark) frame, the fields for IP address and TCP/UDP, which are at a higher level than IPv4, are considered as "any" and there are the following patterns: IP source addresses (2³² patterns), IP destination addresses (2³² patterns), TCP/UDP source ports (2¹⁶ patterns), and TCP/UDP destination ports (2¹⁶ patterns). In this case, the comparison value is able to be treated as 2⁹⁶.

While the control device 20 transmits control information that widely matches in response to a Packet-In in the example described above, the control device 20 may sort the control information and may select and transmit a flow entry that widely matches to the switch 10 also in a case where the control device 20 proactively transmits the control information.

### [Second exemplary embodiment]

Next, a second exemplary embodiment, in which the control device 20 of the first exemplary embodiment is modified, of the present invention will be described in detail with reference to drawings. Fig. 8 is a diagram illustrating a structure of the second exemplary embodiment of the present invention. The difference from the first exemplary embodiment illustrated in Fig. 2 is a point where a transmission request storage unit 23 that stores an unprocessed Packet-In message is added to the control device and a function of processing the unprocessed Packet-In message stored in the transmission request storage unit 23 is added to a request processing unit 22A. The rest of the structure is the same as that of the first exemplary embodiment and therefore the following description will focus on the difference.

When, for example, a Packet-In message is received from another switch while the request processing unit 22A is processing another Packet-In message, a pending Packet-IP message that is to be processed is stored in the transmission request storage unit 23.

When an unprocessed Packet-In message is stored in the transmission request storage unit 23, the request processing unit 22A retrieves the unprocessed Packet-In message from the transmission request storage unit 23, searches for a flow entry having a looser match field, i.e. a match field whose wider match range is wider, and transmits the flow entry to the switch that transmitted the Packet-In message and to other switches on the path, as the first exemplary embodiment described above.

When two or more unprocessed Packet-In messages are stored in the transmission request storage unit 23, the request processing unit 22A performs the following operation.

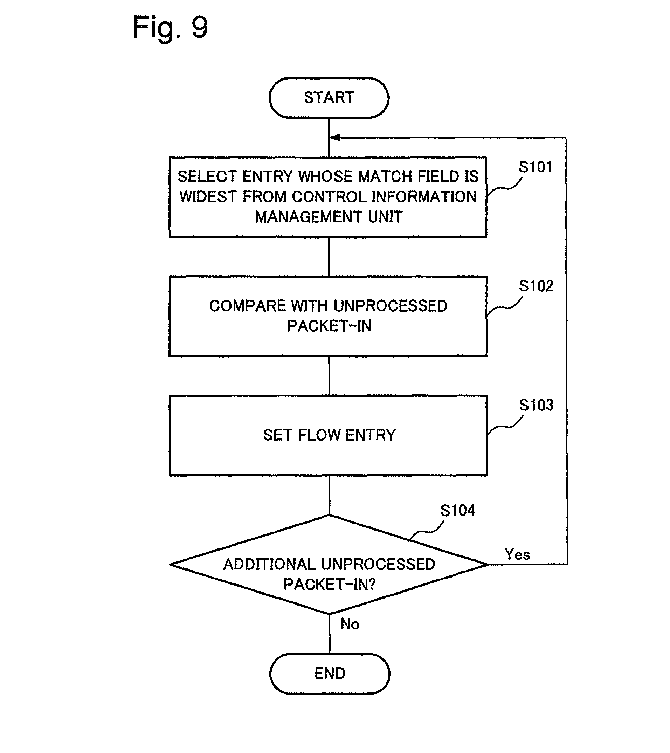

Fig. 9 is a diagram for describing an operation performed when two or more unprocessed Packet-In messages are stored. First, the request processing unit 22A selects a flow entry having the loosest match field, i.e. the match field whose match range is the widest from the control information management unit 21 (step S101), and searches the transmission request storage unit 23 for a Packet-In message of the packet that matches the match field (step S102). The request processing unit 22A processes the Packet-In message found first as a result of searching (specifically, the request processing unit 22A transmits the selected flow entry to the switch that transmitted the Packet-In message (step S103)). The process described above is repeated until there is no more unprocessed Packet-In message.

Fig. 10 is a diagram for specifically describing the operation from steps S101 to S103 described above. In step S101, for example, a flow entry having the loosest match field, i.e. the match field having the widest match range is the widest (x.x.x.x/16 allow) is selected from the control information management unit 21. Then, in next step S102, the transmission request storage unit 23 is searched for a Packet-In message that matches the match field (x.x.x.x./16 allow) of the flow entry. Consequently, the Packet-In message with the source IP address (srcIP = x.x.x.x.) in Fig. 10, for example, is processed first.

In this way, when unprocessed Packet-In messages are accumulated, occurrence of additional Packet-In messages can be suppressed by processing first the Packet-In message for which the loosest match field, i.e. the match field whose match range is the widest is able to be set.

While exemplary embodiments of the present invention have been described, the present invention is not limited to the exemplary embodiments described above. Further modifications, substitutions, and adjustments can be made without departing from the basic technical concepts of the present invention. For example, the network topology and the numbers of first and second switches used in the exemplary embodiments described above are illustrative only and there is no limitation on the numbers.

While the request processing unit 22A of the control device 20 selects a flow entry for which a looser match field, i.e. a match field whose match range is wider is able to be set in the description of the second exemplary embodiment described above, this function may be omitted. In that case, a structure specialized for suppressing a generation of a Packet-In message is realized by first processing a Packet-In message for which a looser match field, i.e. a match field whose match range is wider is able to be set when there are a plurality of unprocessed Packet-In messages.

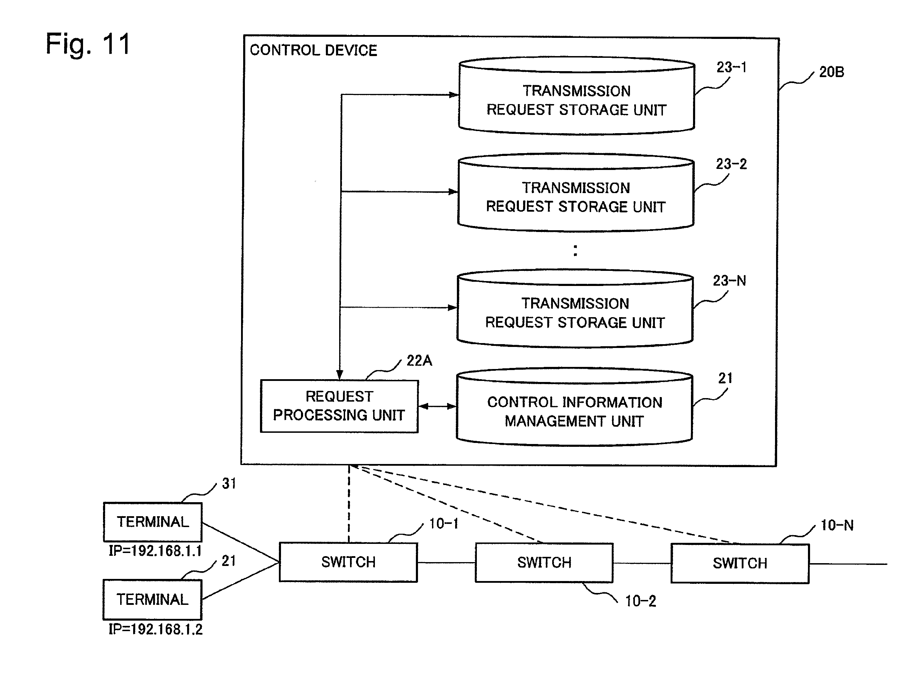

While only one transmission request storage unit 23 is provided in the above description, a plurality of transmission request storage units 23 may be provided. For example, when one control device 20B is connected with a plurality of switches 10-1 - 10N as illustrated in Fig. 11, transmission request storage units 23-1 - 23-N may be provided for the switches 10-1 - 10N, respectively, in the control device 20B.

In the structure illustrated in Fig. 11, Packet-In messages from each of the switches 10-1 - 10-N are stored in the transmission request storage units 23-1 - 23-N associated with the switches, respectively. The request processing unit 22A preferentially processes a Packet-In message that matches the loosest match field, i.e. the match field whose match range is the widest first, as in the second exemplary embodiment described above, for each of the transmission request storage units. For the priority order of the transmission request storage units 23-1 - 23-N, it is possible to adopt a round robin method or the like, in which X Packet-In messages in the transmission request storage unit 23-1 are processed, then X Packet-In messages in the transmission request storage unit 23-2 are processed, and so on. Here, X is a preset value and may be specified in a configuration file or the like, for example. When a transmission request storage unit is empty or becomes empty before X Packet-In messages are processed, the process may be sifted to a next transmission request storage unit.

The structure illustrated in Fig. 11 has the following advantageous effects. When only one transmission request storage unit 23 is provided as in the structure illustrated in Fig. 8, the order of processing is determined simply based on whether or not to match the loosest match field, i.e. the match field whose match range is the widest. Accordingly, there is a possibility that requests only from a particular switch which sends a Packet-In message that matches a match field having a wide match range are processed preferentially. For example, when packets that match match fields having wide match ranges successively arrive at a specific switch by chance, Packet-In messages from the switch are processed preferentially, and therefore processing of Packet-In messages from other switches may be delayed. However, according to the structure and operation illustrated in Fig. 11, the transmission request storage units are separated for each of the switches and processing is performed in a preset order, and, therefore, it is possible to prevent Packet-In messages from a specific switch from being exclusively processed.

While the number X of generation requests processed at a time is the same among the transmission request storage units 23-1 - 23-N in the foregoing description, the number X may vary for each of the transmission request storage units. In the case of this operation, it is possible to introduce priority degrees in such a way as to increase, for example, the number of transmission requests from a main switch to be processed. Alternatively, priorities may be assigned to each of the transmission request storage units by taking into account locations of the switches or frequency of packet receptions at the switches.

Note that while switches 10-1 - 10-N and the transmission request storage units 23-1 - 23-N are in a one-to-one relationship in the example of Fig. 11, generation request from a plurality of switches may be stored in one transmission request storage unit.

Note that disclosed content of each of Non Patent Literatures described above are incorporated herein by reference. Within a framework of the entire disclosure of the present invention (including claims) and on the basis of the basic technical concepts of the present invention, the exemplary embodiments and examples can be changed and adjusted. Furthermore, within the framework of the claims of the present invention, various combinations and selections of various disclosed elements (including each element of each of the claims, each element of each of the exemplary embodiments and examples and the elements of the drawings) are possible. In other words, obviously, the present invention includes various variations and modifications that those skilled in the art would comprehend according to the entire disclosure including the claims and the technical concepts. In particular, it should be understood that an arbitral value and a smaller range included in ranges of numerical values described herein are described explicitly even if they are not particularly described explicitly.

### Reference signs List

- 10, 10-1 - 10-N: Switch (switches)
- 20, 20A, 20B: Control device
- 21: Control information management unit
- 22, 22A: Request processing unit
- 23, 23-1 - 23-N: Transmission request storage unit
- 31, 32: Terminal

## Claims

1. A control device comprising:
a control information management unit which manages control information including a match field and used for causing a packet which matches with the match field to be processed;
a transmission request storage unit which stores uncontrolled transmission requests in transmission requests for control information for packets received by a switch under the control from the switch; and
a request processing unit which selects a piece of control information having a looser match field from among pieces of control information managed by the control information management unit, selects an unprocessed transmission requests for control information which matches the selected piece of control information having a looser match field in unprocessed transmission requests for control information stored in the transmission request storage unit, and replies control information with the looser match field to the switch transmitting the unprocessed transmission requests for the control information.

2. The control device according to claim 1, wherein
the control device includes a plurality of the transmission request storage units, and each transmission request storage unit stores a transmission request from for at least one switch corresponding to the transmission request storing unit, and wherein
per the transmission request storage unit, the request processing unit selects an unprocessed request for the control information and replies the piece of control information to the switch.

3. The control device according to claim 2, wherein
the request processing unit processes predetermined number of transmission requests for the control information for each transmission request storage and selects a next request processing unit.

4. A communication system, comprising:
a control device including;
a control information management unit which manages control information including a match field and used for causing a packet which matches with the match field to be processed,
a transmission request storage unit which stores uncontrolled transmission requests in transmission requests for control information for packets received by a switch under the control from the switch, and
a request processing unit which selects a piece of control information having a looser match field from among pieces of control information managed by the control information management unit, selects an unprocessed transmission requests for control information which matches the selected piece of control information having a looser match field in unprocessed transmission requests for control information stored in the transmission request storage unit, and replies control information with the looser match field to the switch transmitting the unprocessed transmission requests for the control information; and
a switch which transmits the transmission request for the control information to the control device.

5. A communication method, comprising:
by a control device including a control information management unit which manages control information including a match field and used for causing a packet which matches with the match field to be processed,
a step of storing, in a transmission request storage unit, unprocessed transmission requests in transmission requests for the control information to process packets received from a switch which is controlled by the control device; and
a step of selecting a piece of control information having a looser match field from among pieces of control information managed by the control information management unit, selects an unprocessed transmission requests for control information which matches the selected piece of control information having a looser match field in unprocessed transmission requests for control information stored in the transmission request storage unit, and replies control information with the looser match field to the switch transmitting the unprocessed transmission requests for the control information.

6. A program for making a computer, which realizes a control device including a control information management unit which manages control information including a match field and used for causing a packet which matches with the match field to be processed, execute:
a process that stores, in a transmission request storage unit, unprocessed transmission requests in transmission requests for the control information to process packets received from a switch which is controlled by the control device; and
a process that selects a piece of control information having a looser match field from among pieces of control information managed by the control information management unit, selects an unprocessed transmission requests for control information which matches the selected piece of control information having a looser match field in unprocessed transmission requests for control information stored in the transmission request storage unit, and replies control information with the looser match field to the switch transmitting the unprocessed transmission requests for the control information.
